Europäisches Patentamt

European Patent Office

Office européen des brevets

(19)

(11) Veröffentlichungsnummer: **0 349 708**

**A1**

(12) # EUROPÄISCHE PATENTANMELDUNG

(21) Anmeldenummer: **89105099.9**

(22) Anmeldetag: **22.03.89**

(51) Int. Cl.4: **C02F 9/00** , **C02F 1/28** , **C02F 3/00** , **C02F 1/72**

(30) Priorität: **04.07.88 DE 3822508**

(43) Veröffentlichungstag der Anmeldung: **10.01.90 Patentblatt 90/02**

(84) Benannte Vertragsstaaten: **AT BE CH DE ES FR GB GR IT LI LU NL SE**

(71) Anmelder: **DIDIER-WERKE AG**
**Lessingstrasse 16-18**
**D-6200 Wiesbaden(DE)**

(72) Erfinder: **Bender, Heinrich**
**Eichendorffstrasse 7**
**D-5210 Troisdorf(DE)**
Erfinder: **Böhm, Adolf**
**Bergstrasse 31**
**D-5330 Königswinter(DE)**
Erfinder: **Pöppinghaus, Klaus, Prof., Dr., Ing.**
**Heidweg 17A**
**D-5100 Aachen(DE)**

(74) Vertreter: **Brückner, Raimund, Dipl.-Ing.**
**c/o Didier-Werke AG Lessingstrasse 16-18**
**D-6200 Wiesbaden(DE)**

(54) **Verfahren zum Reinigen von Wässern.**

(57) Die Erfindung betrifft ein Verfahren zum Reinigen von Wässern mit toxischen, organischen Verunreinigungen, insbesondere aus Sondermüll-Deponien. Das Verfahren enthält eine einer biologischen Stufe (2) vorgeschalteten Adsorptionsanlage (1). Die Aufgabe der Adsorptionsanlage ist es, die für die Biologie giftigen Stoffe zu entfernen.

Figur 1

EP 0 349 708 A1

## Verfahren zum Reinigen von Wässern

Die Erfindung betrifft ein Verfahren zum Reinigen von Wässern mit toxischen, organischen Verunreinigungen, insbesondere aus Sondermüll-Deponien.

In der üblichen Abwasserbehandlung werden biologische Verfahren eingesetzt. Solche Verfahren sind beispielsweise in "Ullmann Encyklopädie der technischen Chemie, Band 6, 4. Auflage, Seite 425 ff." beschrieben.

Der besondere Vorteil biologischer Verfahren liegt darin, daß nach Adaption der Mikroorganismen die organischen Inhaltsstoffe bei niedrigen Betriebskosten abgebaut werden können.

Eine vollständige Adaption der Mikroorganismen für alle Wasserinhaltsstoffe ist nicht möglich. Insbesondere bei Anwesenheit von toxischen Inhaltsstoffen ist die Adaptionsneigung in Gegenwart von biologisch gut abbaubaren Stoffen sehr gering. Schwankungen bezüglich Art und Konzentration der organischen Stoffe sowie hydraulische Stoßbelastungen beeinflussen weiterhin nachteilig die Möglichkeit der Eliminierung toxischer Stoffe auf biologischem Wege. Daher ist ein mikrobieller Abbauprozeß bei Anwesenheit toxischer organischer Stoffe latent gefährdet. Solche Stoffe sind z.B. Chlorkohlenwasserstoffe, Kohlenwasserstoffe, Chlorphenole, Aromaten, Chlorbenzole, Pestizide etc.. Auswirkungen auf den biologischen Reinigungsprozeß durch diese Stoffe sind neben der Gefahr der Inaktivierung der Biomasse und einer reduzierten, nicht vorhandenen Abbauleistung für toxische organische Stoffe auch der Umstand, daß nach Adsorption von nicht abbaubaren organischen Schadstoffen an die Biomasse der nachfolgende Faulprozeß gestört bzw. eine landwirtschaftliche Nutzung des Klärschlammes nicht möglich ist.

Aufgabe der Erfindung ist es, ein Verfahren vorzuschlagen, bei dem die hoch-toxischen organischen Schadstoffe bis zu Konzentrationen aus den Abwässern entfernt werden, daß eine nachfolgende biologische Reinigung nicht mehr gestört wird.

Erfindungsgemäß wird diese Aufgabe dadurch gelöst, daß in einer ersten, als Adsorptionsanlage ausgebildeten Stufe, die für einen biologischen Abbau organischer Verunreinigungen toxischen Verbindungen selektiv entfernt und anschließend in einer zweiten, als biologische Reinigung ausgebildeten Stufe, die biologisch abbaubaren Restverunreinigungen abgebaut werden.

Der Vorteil dieses Verfahrens liegt insbesondere darin, daß lange Verweilzeiten in der biologischen Stufe vermieden bzw. die Abbauraten erhöht werden. Hierdurch können die Betriebskosten erheblich gesenkt werden.

Weitere Ausgestaltungen der Erfindung ergeben sich aus den Merkmalen der Unteransprüche.

Das erfindungsgemäße Verfahren wird in der Zeichnung dargestellt. Es zeigen:

Figur 1 ein Fließschema des erfindungsgemäßen Verfahrens,

Figur 2 dasselbe Fließschema wie in Figur 1, mit einer nachgeschalteten Sonderbiologie, und

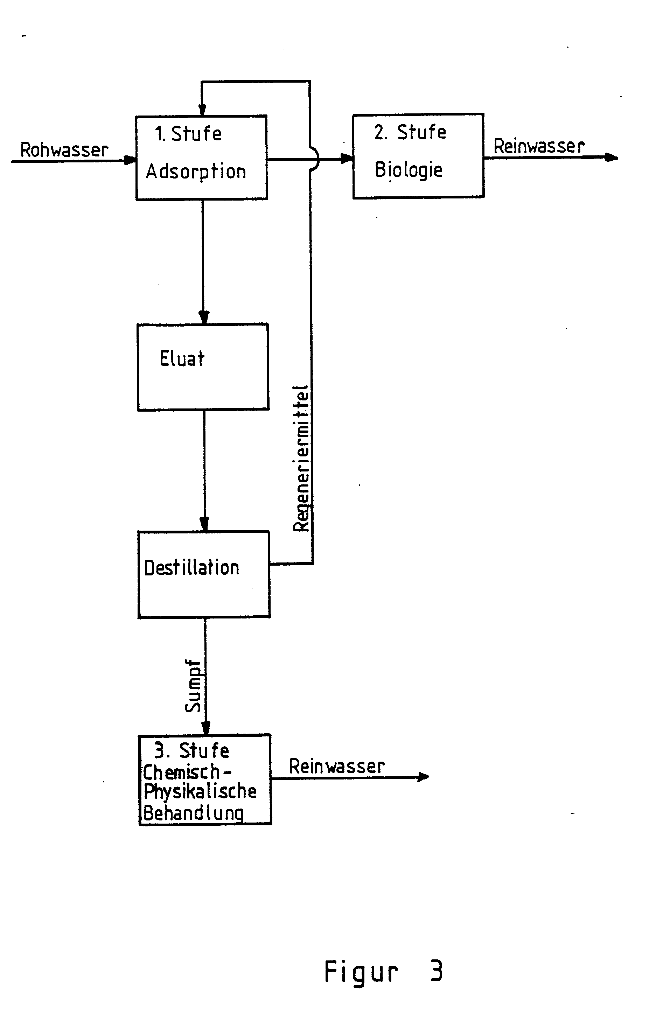

Figur 3 das Fließschema wie in Figur 1, mit einer zugeschalteten chemisch physikalisch Behandlungsstufe.

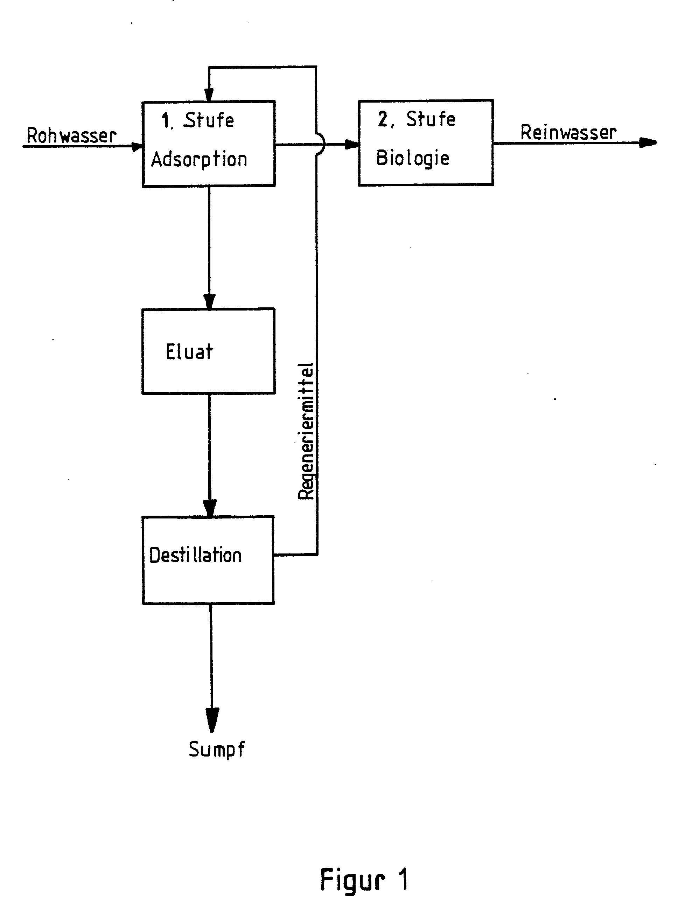

In Figur 1 gelangt das Rohwasser zunächst in eine Adsorptionsanlage. Als Adsorptionsmittel werden regenerierfähige Polymerharze eingesetzt, vorzugsweise Divinylbenzol-Styrol-Copolymerisate. Diese Adsorberharze sind in der Lage, aus chemisch/organisch hochbelasteten Sickerwässern, die für die biologische Reinigungsanlage toxisch wirkenden organischen Schadstoffe weitgehendst selektiv zu entfernen.

Aus der Adsorptionsanlage wird das von den toxischen organischen Stoffen befreite Rohwasser in die biologische Anlage geleitet. Nach Erschöpfung werden die Adsorberharze mit einem Lösungsmittel regeneriert. Das Regenerat der Adsorptionsstufe gelangt über eine Vorlage in die Destillationsstufe, die es aufgrund der unterschiedlichen Siedepunkte im Sumpfprodukte und Regeneriermittel trennt, welches in die Adsorptionsstufe zurückgeführt wird.

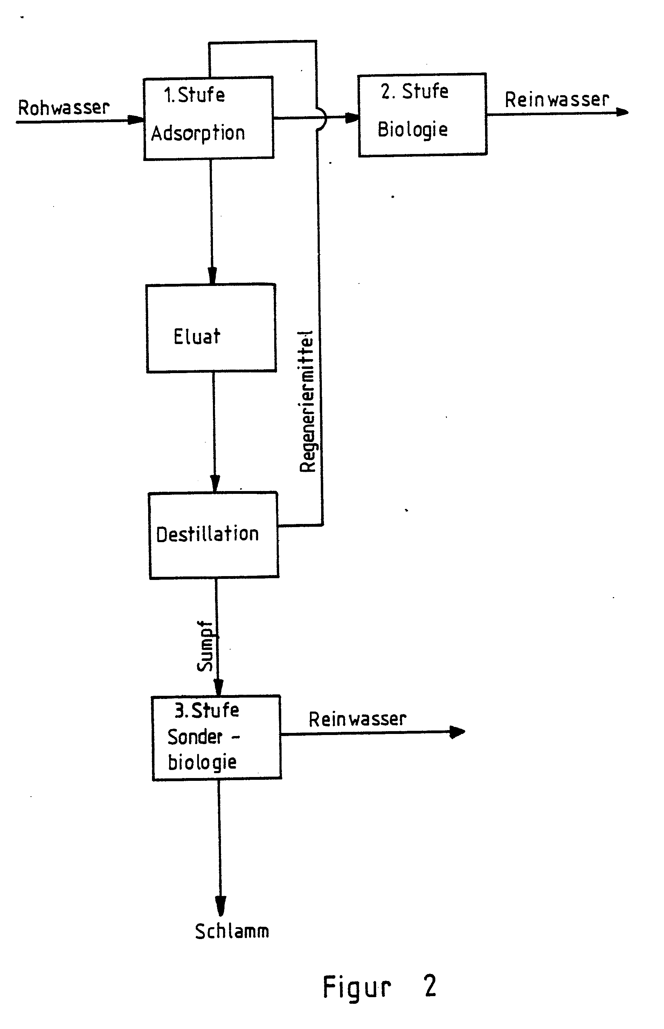

Je nach Zusammensetzung des Abwassers werden gemäß Figur 2 die Sumpfprodukte in eine Sonderbiologie geleitet, um die adsorbierten toxischen Verunreinigungen aus der ersten Stufe abzubauen. Diese toxischen Stoffe können vorher durch Zusatz von Oxidationsmitteln, z.B. Wasserstoffperoxid und/oder Ozon anoxidiert werden, wodurch die biologische Abbauleistung gesteigert wird. Die Eliminierung toxischer organischer Stoffe in einer Sonderbiologie ist im Vergleich zu einer biologischen Behandlungsanlage als alleinige Behandlungsstufe möglich, weil das schadstoffhaltige Sumpfprodukt mengenmäßig und zeitlich bei optimaler Milieueinstellung durch Nährsalze und Temperatur in diese Stufe dosiert werden kann und die Adaption der Mikroorganismen auf bestimmte Schadstoffe beschränkt bleibt. Hierdurch wird verhindert, daß durch Mutation oder Denaturisierung die Mikroorganismen ihre Aktivität verlieren.

Für den biologischen Abbauprozeß steht in der Sonderbiologie im Vergleich zu den herkömmlichen Verfahren wesentlich mehr Zeit zur Verfügung. Da die Sumpfmengen sehr gering sind, kann eine biologische Anlage in kleiner Dimension gebaut werden. Vorteilhaft ist es, die Sonderbiologie als Chargenanlage zu betreiben, so daß, falls notwendig, die Behandlungsdauer ebenfalls variiert werden kann.

Als weitere bevorzugte Ausführungsform können die im Regenerat enthaltenen toxischen Verunreinigungen der ersten Adsorptionsstufe in einer als chemisch/physikalisch ausgebildeten dritten Stufe zersetzt werden. Dies geschieht durch Erhöhung von Temperatur und/oder Druck bzw. durch Zugabe von geeigneten Chemikalien.

Da die Regeneratmenge im Vergleich zur Gesamtabwassermenge sehr klein ist, steht genügend Zeit für eine solche Behandlungsform zur Verfügung.

Beide Sonderausführungen haben weiterhin den Vorteil, daß der Transport zu einer Verbrennungsanlage bzw. die Ablagerung auf eine Sondermülldeponie entfallen kann. Da die Möglichkeit solcher Entsorgungsformen zu nutzen aus Kapazitätsgründen eingeschränkt ist, und die Entsorgungskosten relativ hoch sind, ergeben sich für das erfindungsgemäße Verfahren weitere Vorteile.

## Ansprüche

1. Verfahren zum Reinigen von Wässern mit toxischen, organischen Verunreinigungen, insbesondere aus Sondermüll-Deponien,
dadurch gekennzeichnet,
daß in einer ersten, als Adsorptionsanlage ausgebildeten Stufe die für einen biologischen Abbau organischer Verunreinigungen toxische Verbindungen selektiv entfernt und anschließend in einer zweiten, als biologische Reinigung ausgebildeten Stufe, die biologisch abbaubaren Restverunreinigungen abgebaut werden.

2. Verfahren nach Anspruch 1,
dadurch gekennzeichnet,
daß in einer als Sonderbiologie ausgebildeten dritten Stufe die im Regenerat enthaltenen toxischen Verunreinigungen aus der ersten Stufe abgebaut werden.

3. Verfahren nach Anspruch 1,
dadurch gekennzeichnet,
daß in einer als chemisch physikalisch ausgebildeten dritten Stufe die im Regenerat enthaltenen toxischen Verunreinigungen der ersten Stufe durch Erhöhung von Temperatur und/oder Druck und gegebenenfalls durch Zugabe von geeigneten Chemikalien zersetzt werden.

4. Verfahren nach einem der vorhergehenden Ansprüche,
dadurch gekennzeichnet,
daß in der Adsorptionsanlage als Adsorptionsmittel regenerierfähige Polymer-Adsorberharze eingesetzt werden.

5. Verfahren nach Anspruch 4,
dadurch gekennzeichnet,
daß als Polymer-Adsorberharze Divinylbenzol-Styrol-Copolymerisate eingesetzt werden.

6. Verfahren nach Anspruch 2,
dadurch gekennzeichnet,
daß in der als Sonderbiologie ausgebildeten dritten Stufe die toxischen Verunreinigungen für den biologischen Abbau aufgeschlossen werden.

7. Verfahren nach Anspruch 6,
dadurch gekennzeichnet,
daß die toxischen Verunreinigungen durch Zusatz von Oxidationsmitteln, vorzugsweise Wasserstoffperoxid und/oder Ozon aufgeschlossen werden.

Figur 1

Figur 2

Figur 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 705 592 (ANOX et al.) * Seite 1, Absatz 3; Seite 2, letzter Absatz - Seite 4, Absatz 1 * --- | 1,2 | C 02 F 9/00 C 02 F 1/28 C 02 F 3/00 C 02 F 1/72 |
| X | CHEMICAL ABSTRACTS, Band 102, Nr. 14, 8. April 1985, Seite 353, Zusammenfassung Nr. 119008y, Columbus, Ohio, US; "SYSTEMS FOR ORGANIC WATER TREATMENT" (Nippon Kokan K.K.) & JPA-59 206 090 [84,206,090], 21. November 1984, Appl. 83/80,784, 11 Mai 1983 * Zusammenfassung * --- | 1,2 | |
| X | DE-A-3 525 712 (DIDIER-WERKE) * Spalte 1, Anspruch 1; Spalte 1, Zeile 23 - Spalte 2, Zeile 45 * --- | 2,3 | |
| A | DE-A-2 716 798 (A.D. LITTLE) * Seite 1, Ansprüche 1,5,6; Seite 3, Anspruch 17 * --- | 3-5 | |
| A | CHEMICAL ABSTRACTS, Band 100, Nr. 6, 6. February 1984, Seite 276, Zusammenfassung Nr. 39033w, Columbus, Ohio, US; A.M. KOGANOVSKII et al.: "Possible use of synthetic polymer adsorbents for the removal of organic compounds from wastewaters", & VISN. AKAD. NAUK. UKR. RSR 1983, (10), 44-8 --- | 4,5 | RECHERCHIERTE SACHGEBIETE (Int. Cl.5) C 02 F |
| A | US-A-4 178 239 (UNION CARBIDE) * Spalte 8, Anspruch 1 * --- | 6,7 | |
| A | EP-A-0 238 148 (PAQUES) * Seite 7, Ansprüche 1,6 * ------ | 6,7 | |

Der vorliegende Recherchenbericht wurde für alle Patentansprüche erstellt

| Recherchenort | Abschlußdatum der Recherche | Prüfer |
|---|---|---|
| DEN HAAG | 05-10-1989 | TEPLY J. |